# EUROPEAN PATENT SPECIFICATION

(11) **EP 1 491 562 B1**
(45) Date of publication and mention of the grant of the patent: **17.01.2007**
(21) Application number: 03712962.4
(22) Date of filing: 26.03.2003
(51) Int. Cl.: C08F 214/18, C08F 214/28, C08K 5/19, C08K 3/36

(54) **FLUORINATED OLEFIN POLYMER, CURABLE RESIN COMPOSITION, AND ANTIREFLECTION FILM**
FLUOROLEFINPOLYMER, HÄRTBARE HARZZUSAMMENSETZUNG UND ANTIREFLEXIONSFILM
POLYMERE OLEFINIQUE FLUORE, COMPOSITION DE RESINE DURCISSABLE ET FILM ANTIREFLET

(30) Priority: 29.03.2002 JP 2002097907; 08.10.2002 JP 2002294727; 21.02.2003 JP 2003044461
(43) Date of publication of application: 29.12.2004
(73) Proprietor: JSR Corporation, Tokyo 104-8410 (JP)
(72) Inventor: SUGIYAMA, Naoki, c/o JSR CORPORATION, Tokyo 104-8410 (JP); SHIMOMURA, Hiroomi, c/o JSR CORPORATION, Tokyo 104-8410 (JP); NISHIKAWA, Akira, c/o JSR CORPORATION, Tokyo 104-8410 (JP); YAMAMURA, Tetsuya, c/o JSR CORPORATION, Tokyo 104-8410 (JP); SUZUKI, Katsumi, c/o JSR CORPORATION, Tokyo 104-8410 (JP); ERIYAMA, Yuichi, c/o JSR CORPORATION, Tokyo 104-8410 (JP)
(74) Representative: TBK-Patent
(86) International application number: PCT/JP2003/003678
(87) International publication number: WO 2003/082936

(56) References cited:
- EP-A- 0 953 584
- WO-A-03/054031
- JP-A- 11 035 712
- JP-A- 11 228 631
- JP-A- 2000 109 694
- JP-A- 2000 167 993
- JP-A- 2000 171 604
- JP-A- 2000 313 709
- JP-A- 2001 089 623
- JP-A- 2001 123 035
- JP-A- 2001 215 299
- JP-A- 2001 324 602
- JP-A- 2002 145 952
- US-A- 6 051 665
- PATENT ABSTRACTS OF JAPAN vol. 011, no. 328 (P-629), 27 October 1987 (1987-10-27) & JP 62 112101 A (SUMITOMO CHEM CO LTD), 23 May 1987 (1987-05-23)

## Description

### Technical Field

The present invention relates to a fluorinated olefin polymer and a curable resin composition containing the fluorinated olefin polymer, particularly, to a curable resin composition capable of forming a cured film having high transparency and low reflectivity and having an excellent dust wiping-off property and an antireflection film.

### Background Art

With the development of the multimedia, a diversity of developments are found in various displays these days. Particularly, in displays intended for outdoor use, mainly in portable displays, of these various display, improvements in the visibility thereof are of increasing great importance. There are also demands from users that large-screen displays should be better in visibility, and particulars of the demands are intact technical issues.

It is conventional practice to coat the substrate of a display with an antireflection film made of a low-refractivity material as means of improving the display in visibility. As a method of forming the antireflection film, for example, there is known a method in which a thin film made of a fluorine compound is formed by a vapor deposition method. In recent years, mainly in liquid crystal displays, there is demanded a technique capable of forming an antireflection film at a low cost for a large-screen display. In a vapor deposition method, however, it is difficult to form a uniform antireflection film highly efficiently on a substrate having a large area, and a vacuum apparatus is required, so that it is difficult to decrease the cost.

Under the circumstances, studies are being made of a method in which a low-refractivity fluorinated polymer is dissolved in an organic solvent to prepare a liquid composition and the composition is applied to the surface of a substrate to form an antireflection film. For example, it is proposed that a fluorinated alkyl silane be applied to the surface of a substrate (for example, see JP-A-61-40845 and JP-B-6-98703). Further, there is proposed a method in which a fluorinated polymer having a specific structure is applied (for example, see JP-A-6-115023).

The conventional antireflection film made of any fluorine-containing material has no sufficient adhesion to a substrate. It has a problem that particularly when the antireflection film is abraded or scratched repeatedly, it is peeled off, and in addition to this, it also has a problem that soiling and dust in air adhere to the surface of antireflection film of a liquid crystal display, etc., to degrade the visibility. The present invention has been made under the circumstances, and it is an object of the present invention to provide a curable resin composition capable of forming a cured film that has high transparency, a low refractive index and high adhesion to a substrate and that has excellent scratch resistance and dust wiping-off properties. It is another object of the present invention to provide an antireflection film that has high transparency and high adhesion to a substrate and also has excellent scratch resistance and dust wiping-off properties.

EP-A-1 460 091 discloses an ethylenically unsaturated group-containing fluoropolymer, which is obtained by reacting a compound containing one isocyanate group and at least one ethylenically unsaturated group, and a hydroxyl group-containing fluoropolymer at an isocyanate group/hydroxyl group molar ratio of 1.1 to 1.9.

U.S. Patent No. 6,051,665 refers to a coating composition comprising a fluorine-containing polymer, a compound or a partial condensation product thereof, which is represented by the formula SiR¹ₙ(OR²)₄₋ₙ, wherein R¹ represents an alkyl group, an aryl group, an aralkyl group, a group containing -SH, or a group containing -NCO, each containing 1 to 10 carbon atoms, R² represents a hydrogen atom, an alkyl group or an acyl group having 1 to 10 carbon atoms, and n is an integer from 0 to 3, and a chelate complex derived from a metal alkoxide.

EP-A-0 953 584 describes an olefin polymer which comprises a polysiloxane segment in the main chain, has 30 wt% or more fluorine content, and has a polystyrene-reduced number average molecular weight of 5,000 or more.

### Disclosure of the Invention

The curable resin composition of the present invention is defined in claim 1.

The antireflection film of the present invention comprises a cured product obtained by curing the above curable resin composition.

### Best Modes for Carrying out the Invention

### 1. Fluorinated olefin polymer

The fluorinated olefin polymer of the present invention is a polymer containing 10 mol% to 50 mol% of structural units derived from a hydroxylated monomer and having a main chain containing a polysiloxane segment. The fluorinated olefin polymer preferably has a fluorine content of 30 % by weight or more and has a number average molecular weight, as a polystyrene, of 5,000 or more. In the present invention, the fluorinated olefin polymer is an olefin polymer having a main chain having a polysiloxane segment represented by the following general formula (1), and the amount ratio of the above polysiloxane segment in the fluorinated olefin polymer is generally adjusted to 0.1 to 20 mol%. 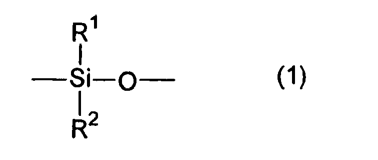 wherein each of R¹ and R² is independently a hydrogen atom, an alkyl group, a halogenated alkyl group or aryl group.

In the fluorinated olefin polymer, the fluorine content is preferably 30 % by weight or more, more preferably 40 to 60 % by weight, and further, the number average molecular weight thereof as a polystyrene, obtained by gel permeation chromatography, is preferably 5,000 or more, more preferably 10,000 to 500,000. The above fluorine content refers to a value obtained by measurement according to an alizarin complexometric method, and the above number average molecular weight refers to a value obtained by using tetrahydrofuran as a developing solution.

The fluorinated olefin polymer of the present invention can be obtained by providing (a) a fluorinated olefin compound (to be referred to as "component (a)" hereinafter), (b) a hydroxylated monomer compound copolymerizable with the component (a) (to be referred to as "component (b)" hereinafter) and (c) an azo-group-containing polysiloxane compound (to be referred to as "component (c)" hereinafter), optionally providing (d) a reactive emulsifier (to be referred to as "component (d)" hereinafter) and/or (e) a monomer compound that is copolymerizable with the component (a) and is other than the component (b) (to be referred to as a component (e) hereinafter) and reacting these compounds.

Examples of the fluorinated olefin compound as a component (a) include compounds having at least one polymerizable unsaturated double bond and at least one fluorine atom each. Specific examples thereof include (1) fluoroolefins such as tetrafluoroethylene, hexafluoropropylene and 3,3,3-trifluoropropylene; (2) perfluoro(alkyl vinyl ethers) or perfluoro(alkoxyalkyl vinyl ethers); (3) perfluoro(alkyl vinyl ethers) such as perfluoro(methyl vinyl ether), perfluoro(ethyl vinyl ether), perfluoro(propyl vinyl ether), perfluoro(butyl vinyl ether) and perfluoro(isobutyl vinyl ether); and (4) perfluoro(alkoxyalkyl vinyl ethers) such as perfluoro(propoxypropyl vinyl ether). These compounds may be used singly or as a mixture containing at least two members of these. Of these compounds, hexafluoropropylene, perfluoro(alkyl vinyl ether) or perfluoro(alkoxyalkyl vinyl ether) is particularly preferred, and it is more preferred to use these in combination.

Examples of a hydroxylated monomer compound as a component (b) include (1) hydroxylated vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 5-hydroxypentyl vinyl ether and 6-hydroxyhexyl vinyl ether; (2) hydroxylated allyl ethers such as 2-hydroxyethyl allyl ether, 4-hydroxybutyl allyl ether and glycerol monoallyl ether; (3)allyl alcohol; (4) hydroxyethyl (meth)acrylate, and so forth. These compounds may be used singly or as a mixture containing at least two members of these. Hydroxylated alkyl vinyl ethers are preferred.

The azo-group-containing polysiloxane compound as a component (c) refers to a compound containing a thermally easily cleavable azo group represented by -N=N- and also having a polysiloxane segment of the above general formula (1). For example, this compound can be produced by the method described in JP-A-6-93100. Specific examples of the component (C) include compounds represented by the following general formula (2). 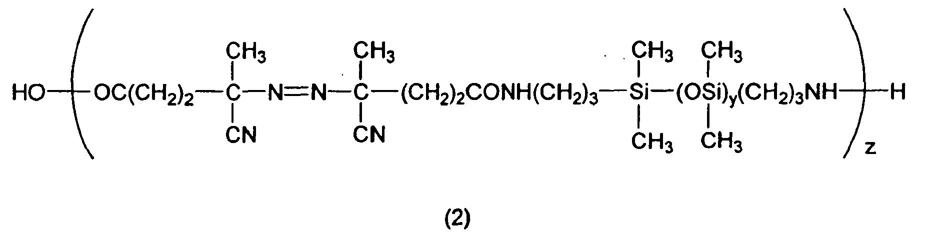 wherein y = 10 to 500, and z = 1 to 50.

Examples of the combination of the above components (a), (b) and (c) preferably include (1) fluoroolefin/hydroxylated alkylvinyl ether/polydimethylsiloxane unit, (2) fluoroolefin/perfluoro(alkylvinyl ether)/hydroxylated alkylvinyl ether/polydimethylsiloxane unit, (3) fluoroolefin/perfluoro(alkoxyalkyl vinyl ether)/hydroxylated alkylvinyl ether/polydimethylsiloxane unit, (4) fluoroolefin/perfluoro(alkylvinyl ether)/hydroxylated alkylvinyl ether/polydimethylsiloxane unit, and (5) fluoroolefin/perfluoro(alkoxyalkylvinyl ether)/hydroxylated alkylvinyl ether/ polydimethylsiloxane unit.

In the fluorinated olefin polymer of the present invention, the amount ratio of structural units derived from the component (a) is preferably 20 to 70 mol%, more preferably 25 to 65 mol%, particularly preferably 30 to 60 mol%. When the amount ratio of structural units derived from the component (a) is less than 20 mol%, the fluorine content in an obtained fluorinated olefin polymer is likely to be too small, and a cured product from an obtained curable resin composition cannot be a product having a sufficiently low refractive index. When the amount ratio of structural units from the component (a) exceeds 70 mol%, the solubility of an obtained fluorinated olefin polymer in an organic solvent is very low, and an obtained curable resin composition is poor in transparency and adhesion to a substrate.

In the fluorinated olefin polymer, the amount ratio of structural units derived from the component (b) is 10 to 50 mol%. The lower limit value thereof is preferably 13 mol% or more, still more preferably over 20 mol%, or 21 mol% or more, and the upper limit value thereof is preferably 45 mol% or less, more preferably 35 mol% or less. When the fluorinated olefin polymer containing a given amount of the above component (b) is used to constitute the curable resin composition, a cured product thereof can materialize excellent scratch resistance and dust wiping-off properties. When the amount ratio of structural units derived from the component (b) is less than 10 mol%, the fluorinated olefin polymer is poor in solubility in an organic solvent. When it exceeds 50 mol%, a cured product of the curable resin composition is degraded in optical properties such as transparency and low reflectivity.

The azo-group-containing polysiloxane compound as a component (c) is a thermal radical-generating agent itself, and it works as a polymerization initiator in the polymerization for obtaining the fluorinated olefin polymer. It may be used in combination with other radical initiator. In the fluorinated olefin polymer, the amount ratio of structural units derived from the component (c) is a ratio at which the polysiloxane segment of the general formula (1) is preferably 0.1 to 20 mol%, more preferably 0.1 to 15 mol%, particularly preferably 0.1 to 10 mol%, particularly preferably 0.1 to 5 mol%. When the amount ratio of the polysiloxane segment of the general formula (1) exceeds 20 mol%, an obtained fluorinated olefin polymer is poor in transparency, and when it is used as a coating agent, a repelling, etc., are liable to take place during the application.

In the present invention, further, it is preferred to use a reactive emulsifier as a monomer component and component (d) in addition to the above components (a) to (c). The use of the component (d) can attain excellent coatability and leveling properties when the fluorinated olefin polymer is used as a coating agent. As the above reactive emulsifier, it is particularly preferred to use a nonionic reactive emulsifier. Specific examples of the nonionic reactive emulsifier include compounds of the following general formula (3) or (4). 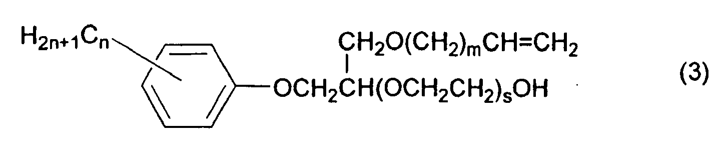 wherein n, m and s represent recurring units, n = 1 to 20, m = 0 to 4, and s = 3 to 50. 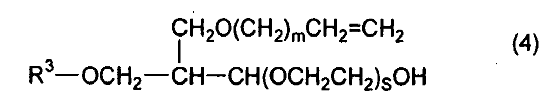 wherein m and s are as defined in the general formula (3), R³ is a linear or branched alkyl group, preferably an alkyl group having 1 to 40 carbon atoms.

In the fluorinated olefin polymer, the amount ratio of structural units derived from the component (d) is preferably 0 to 10 mol%, more preferably 0.1 to 5 mol%, particularly preferably 0.1 to 1 mol%. When the above amount ratio exceeds 10 mol%, an obtained curable resin composition comes to have sticking nature, so that handling thereof is difficult, and when it is used as a coating agent, a formed coating is poor in humidity resistance.

The monomer compound as a component (e), which is copolymerizable with the component (a) and is other than the component (b), includes (1) alkyl vinyl ethers or cycloalkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, n-dodecyl vinyl ether, 2-ethylhexyl vinyl ether and cyclohexyl vinyl ether; (2) carboxylic acid vinyl esters such as vinyl acetate, vinyl propionate, vinyl butyrate, vinyl pivalate, vinyl caproate, vinyl versatate and vinyl stearate; (3) (meth)acrylic acid esters such as methyl (meth)acrylate, ethyl (meth)acrylate, n-butyl (meth)acrylate, isobutyl (meth)acrylate, 2-methoxyethyl (meth)acrylate, 2-ethoxyethyl (meth)acrylate and 2-(n-propoxy)ethyl (meth)acrylate; and (4) carboxyl-group-containing monomer compounds such as (meth)acrylic acid, crotonic acid, maleic acid, fumaric acid and itaconic acid, which are all free of a hydroxyl group. Alkylvinyl ethers are preferred.

In the fluorinated olefin polymer, the amount ratio of structural units derived from the component (e) is preferably 0 to 70 mol%, more preferably 5 to 35 mol%. When the above amount ratio exceeds 70 mol%, an obtained curable resin composition comes to have sticking nature, so that handling thereof is difficult, and when it is used as a coating agent, a formed coating is poor in humidity resistance.

When the component (d) is contained, the combination of the component (a), component (b), component (c), component (d) and component (e) preferably includes the following; (1) fluoroolefin/hydroxylated vinyl ether/polydimethylsiloxane unit/nonionic reactive emulsifier/alkyl vinyl ether, (2) fluoroolefin/perfluoro(alkyl vinyl ether)/hydroxylated vinyl ether/polydimethylsiloxane unit/nonionic reactive emulsifier/alkyl vinyl ether, (3) fluoroolefin/perfluoro(alkoxyalkyl vinyl ether)/hydroxylated vinyl ether/polydimethylsiloxane unit/nonionic reactive emulsifier/alkyl vinyl ether, (4) fluoroolefin/perfluoro(alkyl vinyl ether)/hydroxylated vinyl ether/polydimethylsiloxane unit/nonionic reactive emulsifier/alkyl vinyl ether, and (5) fluoroolefin/perfluoro(alkoxyalkyl vinyl ether)/hydroxylated vinyl ether/polydimethylsiloxane unit/nonionic reactive emulsifier/alkyl vinyl ether.

Examples of a radical polymerization initiator that can be used in combination with the component (c) include (1) diacyl peroxides such as acetyl peroxide and benzoyl peroxide; (2) ketone peroxides such as methyl ethyl ketone peroxide and cyclohexanone peroxide; (3) hydroperoxides such as hydrogen peroxide, tert-butyl hydroperoxide and cumene hydroperoxide; (4) dialkyl peroxides such as di-tert-butyl peroxide, dicumyl peroxide and dilauroyl peroxide; (5) peroxyesters such as tert-butyl peroxyacetate and tert-butyl peroxypivalate; (6) azo compounds such as azobisisobutyronitrile and azobisisovaleronitrile; (7) persulfates such as ammonium persulfate, sodium persulfate and potassium persulfate; and others.

Specific examples other than the above radial polymerization initiators include iodine-containing fluorine compounds such as perfluoroethyl iodide, perfluoropropyl iodide, perfluorobuthyl iodide, (perfluorobuthyl)ethyl iodide, perfluorohexyl iodide, 2-(perfluorohexyl)ethyl iodide, perfluoroheptyl iodide, perfluorooctyl iodide, 2-(perfluorooctyl)ethyl iodide, perfluorodecyl iodide, 2-(perfluorodecyl)ethyl iodide, heptafluoro-2-iodopropane, perfluoro-3-methylbutyl iodide, perfluoro-5-methylhexyl iodide, 2-(perfluoro-5-methylhexyl)ethyl iodide, perfluoro-7-methyloctyl iodide, 2-(perfluoro-7-methyloctyl)ethyl iodide, perfluoro-9-methyldecyl iodide, 2-(perfluoro-9-methyldecyl)ethyl iodide, 2,2,3,3-tetrafluoropropyl iodide, 1H,1H,5H-octafluoropentyl iodide, 1H,1H,7H-dodecafluoroheptyl iodide, tetrafluoro-1,2-diiodoethane, octafluoro-1,4-diiodobutane and dodecafluoro-1,6-diiodohexane. Each of the iodine-containing fluorine compounds can be used alone or in combination with the above organic peroxide, azo compound or persulfate.

In the present invention, any one of an emulsion polymerization method, a suspension polymerization method, a mass polymerization method and a solution polymerization method using a radical polymerization initiator can be employed as a polymerization method for producing the fluorinated olefin polymer, and the polymerization procedure can be selected from a batch method procedure, a semi-continuous procedure or a continuous procedure as required.

The polymerization reaction for obtaining the fluorinated olefin polymer is preferably carried out in solvent system using a solvent. Examples of the above organic solvent preferably include (1) esters such as ethyl acetate, butyl acetate, isopropyl acetate, isobutyl acetate and cellosolve acetate; (2) ketones such as acetone, methyl ethyl ketone, methyl isobutyl ketone and cyclohexanone; (3) cyclic ethers such as tetrahydrofuran and dioxane; (4) amides such as N,N-dimethylformamide and N,N-dimethylacetamide; (5) aromatic hydrocarbons such as toluene and xylene; and others. Further, alcohols, aliphatic hydrocarbons or the like can be used as required in the form of a mixture with the above solvent.

Concerning the fluorinated olefin polymer obtained in the above manner, a reaction solution obtained by the polymerization can be sometimes directly used as a curable resin composition, and the polymerization reaction solution may be also post-treated as required. In the post treatment, for example, the polymerization reaction solution can be subjected to general re-precipitation treatment typified by a purification method in which the polymerization reaction solution is dropwise added to a solvent, such as an alcohol, for insolubilizing the fluorinated olefin polymer to coagulate the above fluorinated olefin polymer, and then the resultant solid copolymer is dissolved in a solvent, whereby a solution of the fluorinated olefin polymer can be prepared. Further, a residual monomer is removed from the polymerization reaction solution, and a remaining solution can be directly used as a solution of the fluorinated olefin polymer.

### 2. Curable resin composition

The curable resin composition of the present invention is practically required to have curability, and when the fluorinated olefin polymer itself has no sufficient curability, the curable resin composition can be imparted with required curability, and can be improved in curing characteristics, by incorporating a crosslinking compound. When the crosslinking compound is used, a mixture of the crosslinking compound with the fluorinated olefin polymer can be used as a curable resin composition, or a reaction product obtained by wholly reacting the fluorinated olefin polymer and the crosslinking compound or a product obtained by partially reacting them can be also used as a curable resin composition.

### (1) Crosslinking compound

Examples of the crosslinking compound include various amino compounds, various hydroxylated compounds such as pentaerythritol, polyphenol, glycol, and others.

The amino compound for use as a crosslinking compound refers to a compound having a total of two or more amino groups capable of reacting with hydroxyl group of the fluorinated olefin polymer, such as hydroxyalkylamino groups, alkoxyalkylamino groups or a combination of hydroxyalkylamino and alkoxyalkyl amino groups. Specific examples thereof include a melamine compound, a urea compound, a benzoguanamine compound and a glycolurea compound.

The melamine compound is generally a compound that is known as having a structure in which a nitrogen atom is bonded to a triazine ring, and specific examples thereof include melamine, alkylated melamine, methylol melamine and alkoxylated methyl melamine. Preferred is a melamine compound having a molecule containing a total of two or more methylol groups, alkoxylated methyl groups or a combination of methylol and alkoxylated methyl groups. Specifically, preferred are methylolated melamine and alkoxylated methyl melamine obtained by a reaction between melamine and formaldehyde under basic conditions or derivatives thereof, and alkoxylated methyl melamine is particularly preferred in that the curable resin composition can be imparted with excellent storage stability and that excellent reactivity can be obtained. The methylolated melamine and alkoxylated methyl melamine for use as a crosslinking compound is not specially limited, and there can be used various resinous substances obtained by the method described in a literature "Plastic Zairyo Koza (Plastic Material Course) [8], Urea-Melamine Resins" (Nikkan Kogyo Shinbunsha).

The urea compound includes urea and others such as polymethylolated urea, alkoxylated methyl urea that is a derivative thereof, methylolated urone having a urone ring and alkoxylated methylurone. As to compounds such as urea derivatives, various resinous substances described in the above literature can be also used.

The amount of the crosslinking compound for use per 100 parts by weight of the fluorinated olefin polymer is preferably 70 parts by weight or less, more preferably 3 to 50 parts by weight, particularly preferably 5 to 30 parts by weight. When the amount of the crosslinking compound is too small, a thin film formed from an obtained curable resin composition may have insufficient durability. When it exceeds 70 parts by weight, it is difficult to avoid gelation in a reaction with the fluorinated olefin polymer, further, a cured film cannot be a low-refractivity film, and a cured product may be fragile.

The reaction between the fluorinated olefin polymer and the crosslinking compound can be carried out, for example, by adding the crosslinking compound to a solution of the fluorinated olefin polymer in an organic solvent and heating the mixture for a proper time period while the reaction system is homogenized by stirring, or the like. The heating temperature for the above reaction is preferably in the range of 30 to 150°C, more preferably in the range of 50 to 120°C. When the above heating temperature is lower than 30°C, the reaction proceeds very slowly. When it exceeds 150°C, undesirably, a crosslinking reaction takes place by methylol groups and/or alkoxylated methyl groups of the crosslinking compound to form a gel. The development of the reaction can be quantitatively confirmed by a method in which methylol groups or alkoxylated methyl groups are quantitatively determined by infrared spectroscopic analysis or the like or by recovering a dissolved polymer according to a re-precipitation method and measuring the polymer for an increment thereof.

In the reaction between the fluorinated olefin polymer and the crosslinking compound, further, the organic solvent can be selected from the organic solvents that are used in the production of the fluorinated olefin polymer. In the present invention, a reaction solution from the fluorinated olefin polymer and the crosslinking compound can be directly used as a solution of the curable resin composition, or the reaction solution can be used after various additives are incorporated as required.

### (2) Additives

For improving the curable resin composition of the present invention in coatability, improving a thin film in physical properties after the curing of the resin composition and imparting a coating film with photosensitivity, the curable resin composition may contain various polymers and monomers having a hydroxyl group, a colorant such as a pigment or a dye, a stabilizer such as an aging preventer or an ultraviolet absorber and various additives such as a thermal acid generating agent, a photosensitive acid generating agent, a surfactant, a polymerization inhibitor, a solvent, particles formed of silica as a main component. For improving a formed cured film in hardness and durability, it is preferred to add a thermal acid generating agent or an optical acid generating agent, and it is particularly preferred to select those which do not decrease the transparency of the curable resin composition after it is cured and that is homogeneously soluble in a solution thereof.

### ① Polymer having hydroxyl group

Examples of the polymer having a hydroxyl group, which can be incorporated into the curable resin composition of the present invention, include a polymer obtained by copolymerization of a copolymerizable monomer having a hydroxyl group such as hydroxyethyl (meth)acrylate and a resin having a phenol skeleton known as a novolak resin or a resol resin.

### ② Colorant such as pigment or dye

Examples of the colorant that can be incorporated into the curable resin composition of the present invention include (1) extender pigments such as alumina white, clay, barium carbonate and barium sulfate; (2) inorganic pigments such as zinc flower, lead white, chrome yellow, red lead oxide, ultramarine blue, iron blue, titanium oxide, zinc chromate, red iron oxide and carbon black; (3) organic pigments such as brilliant carmine 6B, permanent red 6B, permanent red R, benzidine yellow, phthalocyanine blue and phthalocyanine green; (4) basic dyes such as magenta and rhodamine; (5) direct dyes such as direct scarlet and direct orange; (6) acid dyes such as roselin and metanil yellow; and others.

### ③ Stabilizers such as aging preventer and ultraviolet absorber

The aging preventer and the ultraviolet absorber that can be incorporated into the curable resin composition of the present invention can be selected from those that are known as such.

Specific examples of the aging preventer include di-tert-butylphenol, pyrogallol, benzoquinone, hydroquinone, methylene blue, tert-butyl catechol, monobenzyl ether, methyl hydroquinone, amyl quinone, amyloxyhydroquinone, n-butyl phenol, phenyl, hydroquinone monopropyl ether, 4,4'-[1-[9-(1-(4-hydroxyphenol)-1-methylethyl)phenyl]ethylidene]diphenol, 1,1,3-tris(2,5-dimethyl-4-hydroxyphenyl)-3-phenylpropane, diphenylamines, phenylenedimaines, phenothiazine and mercaptobenzimidazole.

Specifically, the ultraviolet absorber can be selected, for example, from salicylic acid ultraviolet absorbers typified by phenyl salicylate, benzophenone ultraviolet absorbers such as dihydoxybenzophenone and 2-hydroxy-4-methoxybenzophenone, benzotriazole ultraviolet absorbers or cyanoacrylate ultraviolet absorbers, which are used as additives for various plastics.

### ④ Acid generating agent

The thermal acid generating agent that can be incorporated into the curable resin composition of the present invention refers to a substance that can moderate heating conditions when a film or the like of the above curable resin composition is cured under heat. Specific examples of the above thermal acid generating agent include various aliphatic sulfonic acids and salts thereof, aliphatic carboxylic acids such as citric acid, acetic acid, maleic acid, etc., and salts thereof, aromatic carboxylic acids such as benzoic acid, phthalic acid, etc., and salts thereof, alkylbenzenesulfonic acids and ammonium salts thereof, various metal salts, phosphoric acid and phosphoric esters of organic acids. The amount of the above thermal acid generating agent for use per 100 parts by weight of the fluorinated olefin polymer in the curable resin composition is preferably 0 to 10 parts by weight, more preferably 0.1 to 5 parts by weight. When the above amount is too large, undesirably, the curable resin composition is poor in storage stability.

### ⑤ Photosensitive acid generating agent

The photosensitive acid generating agent that can be incorporated into the curable resin composition of the present invention refers to a substance that imparts a coating film of the above curable resin composition with photosensitivity and enables the photo-curing of a film of the above curable resin composition, for example, by irradiation with radiation such as light. Examples of the above photosensitive acid generating agent include (1) various onium salts such as iodonium salt, sulfonium salt, phosphonium salt, diazonium salt, ammonium salt and pyridinum salt; (2) sulfone compounds such as β-keto ester, β-sulfonylsulfone and α-diazo compound of these; (3) sulfonic acid esters such as alkylsulfonic ester, haloalkylsulfonic ester, arylsulfonic ester and iminosulfonate; (4) sulfoneimide compounds of the following general formula (5); (5) diazomethane compounds of the following general formula (6); and others. 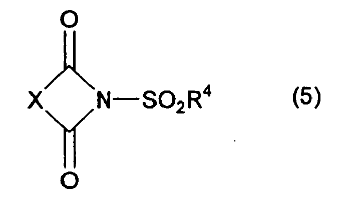 wherein X is a divalent group such as an alkylene group, an arylene group or an alkoxylene group and R⁴ is a monovalent group such as alkyl, aryl, halogenated alkyl or halogenated aryl. 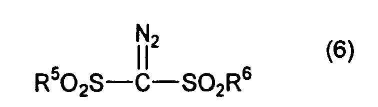 wherein each of R⁵ and R⁶ is independently a monovalent group such as alkyl, aryl, halogenated alkyl or halogenated aryl.

The above photosensitive acid generating agents may be used singly or as a mixture containing at least two members of these. Further, the photosensitive acid generating agent may be used in combination with the above thermal acid generating agent. The amount of the photosensitive acid generating agent for use per 100 parts by weight of the fluorinated olefin polymer in the curable resin composition is preferably 0 to 20 parts by weight, more preferably 0.1 to 10 parts by weight. When the above amount is too large, undesirably, a cured film is poor in strength and degraded in transparency.

### ⑥ Surfactant

The curable resin composition of the present invention may contain a surfactant for improving the coatability thereof. The surfactant can be selected from known surfactants, and specifically, it can be selected, for example, from various anionic surfactants, cationic surfactants or nonionic surfactants. It is particularly preferred to use a cationic surfactant for forming a cured film having excellent strength and having excellent optical properties. Further, it is preferably selected from quaternary ammonium salts, and of these, quaternary polyether ammonium salt is particularly preferred since a cured film is further improved in dust wiping-off properties when it is used. The cationic surfactant that is a quaternary polyether ammonium salt includes ADEKA COL CC-15, CC-36 and CC-42 supplied by Asahi Denka Co., Ltd. The amount of the surfactant for use per 100 parts by weight of the curable resin composition is preferably 5 parts by weight or less.

### ⑦ Polymerization inhibitor

Examples of the thermal polymerization inhibitor that can be incorporated into the curable resin composition of the present invention include pyrogallol, benzoquinone, hydroquinone, methylene blue, tert-butyl catechol, monobenzyl ether, methyl hydroquinone, amyl quinone, amyloxyhydroquinone, n-butyl phenol, phenol, hydroquinone monopropyl ether, 4,4'-[1-[4-(1-(4-hydroxyphenyl)-1-methylethyl)phenyl]ethylidene]diphenol and 1,1,3-tris(2,5-dimethyl-4-hydroxyphenyl)-3-phenylpropane. The above thermal polymerization inhibitor is used, preferably, in an amount of 5 parts by weight or less per 100 parts by weight of the curable resin composition.

### ⑧ Solvent

While the curable resin composition of the present invention contains a solvent as an essential component, the curable resin composition is generally obtained in the form of a solution in a solvent that is used for the production of the fluorinated olefin polymer or a solvent that is used for the reaction between the fluorinated olefin polymer and the crosslinking compound, so that the curable resin composition as it is obtained contains the solvent.

For improving the curable resin composition in coatability, etc., or for other purposes, further, a solvent may be additionally added and incorporated. The solvent that is contained in the curable resin composition of the present invention preferably includes ketones such as methyl ethyl ketone, methyl isobutyl ketone and cyclohexanone and esters such as ethyl acetate and butyl acetate. Further, the curable resin composition of the present invention may also contain a solvent incapable of dissolving the fluorinated olefin polymer, e.g., bad solvents such as water, alcohols and ethers, so long as the fluorinated olefin polymer is not precipitated. In some cases, therefore, a solution of the above fluorinated olefin polymer may have an excellent shelf life and preferred coatability. The above bad solvent includes ethyl alcohol, isopropyl alcohol and tert-butyl alcohol.

### ⑨ Particles formed of silica as main component

The curable resin composition of the present invention may contain particles formed of silica as a main component for improving a cured product of the curable resin composition in scratch resistance, particularly, durability against steel wool. The particles formed of silica as a main component can be selected from those that are known. Concerning the form thereof, further, the particles are not limited to colloidal silica and may be hollow particles, porous particles or core-shell type particles so long as they are spherical in form. Further, the particles are not limited to spherical particles and may be particles having an indeterminate form. Preferred is colloidal silica having a number average particle diameter, measured by a dynamic light scattering method, of 1 to 100 nm, having a solid content of 10 to 40 % by weight and having a pH of 2.0 to 6.5.

As a dispersing medium, water or an organic solvent is preferred. The organic solvent includes alcohols such as methanol, isopropyl alcohol, ethylene glycol, butanol and ethylene glycol monopropyl ether; ketones such as methyl ethyl ketone and methyl isobutyl ketone; aromatic hydrocarbons such as toluene and xylene; amides such as dimethylformamide, dimethylacetamide and N-methylpyrrolidone; esters such as butyl acetate and γ-butyrolactone; and ethers such as tetrahydrofuran and 1,4-dioxane. Of these, alcohols and ketones are preferred. These organic solvents may be used, as a dispersing medium, singly or in the form of a mixture containing at least two members of these.

Examples of commercial products of the particles formed of silica as a main component include SNOWTEX O (number average particle diameter measured by a dynamic light scattering method 7 nm, solid content 20 % by weight, pH 2.7) and SNOWTEX OL (number average particle diameter measured by a dynamic light scattering method: 15 nm, solid content: 20 % by weight, pH 2.5) supplied by Nissan Chemical Industries, Ltd.

Further, there may be used a colloidal silica to which surface treatment such as chemical modification is applied. For example, a colloidal silica containing a hydrolyzable silicon compound having at least one alkyl group in the molecule or a hydrolyzate thereof may be reacted. The above hydrolyzable silicone compound includes trimethylmethoxysilane, tributylmethoxysilane, dimethyldimethoxysilane, dibutyldimethoxysilane, methyltrimethoxysilane, butyltrimethoxysilane, octyltrimethoxysilane, dodecyltrimethoxysilane, 1,1,1-trimethoxy-2,2,2-trimethyl-disilane, hexamethyl-1,3-disiloxane, 1,1,1-trimethoxy-3,3,3-trimethyl-1,3-disiloxane, α-trimethylsilyl-ω-dimethylmethoxysilyl-polydimethylsiloxane and α-trimethylsilyl-ω-trimethoxysilyl-polydimethylsiloxanehexamethyl-1,3-disilazane. Further, a hydrolyzable silicon compound having at least one reactive group in the molecule may be also used. In the hydrolyzable silicon compound having at least one reactive group in the molecule, for example, the compound having an NH₂ group as a reactive group includes urea propyltrimethoxysilane and N-(2-aminoethyl)-3-aminopropyltrimethoxysilane, the compound having an OH group includes bis(2-hydroxyethyl)-3-aminotripropylmethoxysilane, the compound having an isocyanate group includes 3-isocyanatepropyltrimethoxysilane, the compound having a thiocyanate group includes 3-thiocyanatepropyltrimethoxysilane, the compound having an epoxy group includes (3-glycidoxypropyl)trimethoxysilane and 2-(3,4-epoxycyclohexyl)ethyltrimethoxysilane, and the compound having a thiol group includes 3-mercaptopropyltrimethoxysilane. Preferred is 3-mercaptopropyltrimethoxysilane.

The amount of the particles formed of silica as a main component for use per 100 parts by weight of the curable resin composition is preferably 10 to 100 parts by weight, more preferably 10 to 60 parts by weight.

### 3. Antireflection film

The curable resin composition of the present invention can be applied to various substrates when it is in the form of a solution. An obtained coating film is cured, whereby an excellent antireflection film is formed, for example, when the substrate is a transparent substrate.

Generally, the antireflection film specifically has a structure in which a substrate, a high-refractivity film and a cured product as a low-refractivity film, which is obtained by curing the curable resin composition of the present invention, are stacked. Other layer may be interposed between the substrate and the high-refractivity film or between the high-refractivity film and the low-refractivity film, and, a hard coating layer and an antireflection layer may be formed, for example, between the substrate and the high-refractivity film.

Specific examples of the transparent substrate include an inorganic glass and various transparent plastic sheets or films of a polycarbonate resin, an acrylic resin, a styryl resin, an allylate resin, a norbornane resin, and the like. As an application method, a known application method can be employed. Particularly, various methods such as a dipping method, a coating method and a printing method can be applied.

A coating film formed from the curable resin composition by application is preferably provided with a heat history by heating, for curing the coating film to form a cured film having excellent optical properties and durability. When the coating film is left at room temperature, naturally, a curing reaction proceeds with the passage of time, and an intended cured film is formed. Actually, however, the curing by heating is effective for decreasing the required time period. Further, when a thermal acid generating agent is incorporated as a curing catalyst in advance, the curing reaction can be further promoted. The above curing catalyst is not specially limited, and it can be selected from the above various acids or salts thereof which are used as curing agents for a general urea resin, melamine resin, and the like. Particularly, ammonium salt can be preferably used. The heating condition for the curing reaction can be determined as required, and the heating temperature is required to be equivalent to, or lower than, the heat resistance limit temperature of the substrate that is an object of the application.

### Examples

Examples of the present invention will be explained below, while the present invention shall not be limited by these Examples. In the following explanations, "part" and "%" stand for part by weight and % by weight unless otherwise specified.

### <Preparation of fluorinated olefin polymer>

### Example 1

An atmosphere in an autoclave made of stainless steel with an electromagnetic stirrer, having an internal volume of 2.0 liters, was fully replaced with nitrogen gas, and then the autoclave was charged with 500 g of ethyl acetate as a solvent, 52.7 g of perfluoro(propyl vinyl ether) as component (a), 48.9 g of ethyl vinyl ether (EVE) as component (e), 30.1 g of 4-hydroxybutyl vinyl ether (HBVE) as component (b), 19.0 g of "ADEKA REASOAP NE-10" (supplied by Asahi Denka Co., Ltd.) as a nonionic reactive emulsifier that was a component (d), 3.0 g of "VPS-1001" (supplied by Wako Pure Chemical Industries, Ltd.) as an azo-group-containing polydimethylsiloxane that was a component (c) and 2.0 g of lauroyl peroxide (LPO) as a polymerization initiator. The mixture was cooled to -50°C with a dry ice - methanol freezing medium, and then, the system was again purged of oxygen with nitrogen gas.

Then, 118.3 g of hexafluoropropylene (HFP) as component (a) was charged, followed by the initiation of the increasing of the temperature. When the temperature in the autoclave reached 60°C, it was found that the pressure was 60 Pa. Then, the reaction was continued at 60°C with stirring for 20 hours, and when the pressure decreased to 25 Pa, the autoclave was cooled with water to terminate the reaction. After the temperature of the reaction mixture reached room temperature, unreacted monomer was released, and the autoclave was opened to give a polymer solution. The thus-obtained polymer solution was poured into methanol to precipitate a polymer, and then, the polymer was washed with methanol and vacuum-dried at 50°C to give 220 g of fluorinated polymer A1. Table 1 shows the amounts of the monomers charged for obtaining the fluorinated polymer A1.

A 0.5 % solution of the above fluorinated polymer A1 in tetrahydrofuran (THF) was used, and the polymer was measured for a number average molecular weight as a polystyrene by gel permeation chromatography to show 42,000. Further, the polymer was measured for a glass transition temperature (Tg) by a differential thermal analysis (DSC), measured for a fluorine content by an alizarin complexometric method, and measured for a hydroxyl value by an acetylation method using anhydrous acetic acid. Further, the polymer was subjected to NMR analyses of both ¹H-NMR and ¹³C-MNR, and an inorganic silica content was determined on the basis of the fluorine content, the hydroxyl value and the weight of a residue after combustion at 600°C. On the basis of these, the amount ratios of the monomers constituting the fluorinated polymer A-1 were determined. The results are as shown in Table 2.

### Examples 2 - 9 and Comparative Example 1

Fluorinated polymers A2 to A9 and B1 were prepared in the same manner as in Example 1 except that the monomers and the amounts of the monomers charged were changed as shown in Table 1. Further, the amount ratios of the monomers constituting these polymers and the physical properties thereof are as shown in Table 2.

**Table 1**

| | | Ex. 1 | Ex. 2 | Ex. 3 | Ex. 4 | Ex. 5 | Ex. 6 | Ex. 7 | Ex. 8 | Ex. 9 | CEx. 1 |
|---|---|---|---|---|---|---|---|---|---|---|---|
| Component | Monomers | Fluorinated polymer | Fluorinated polymer | Fluorinated polymer | Fluoriated polymer | Fluorinated polymer | Fluorinated polymer | Fluorinated polymer | Fluorinated polymer | Fluorinated polymer | Fluorinated polymer |
| | | A1 | A2 | A3 | A4 | A5 | A6 | A7 | A8 | A9 | B1 |
| (a) | Hexafluoro- propylene | 118. 3 | 100. 7 | 113. 2 | 100. 7 | 98. 2 | 98. 0 | 98. 0 | 100. 7 | 100. 7 | 171. 4 |
| | Perfluoro (propyl vinyl ether) | 52.7 | 75. 0 | 53. 7 | 76. 4 | 73. 6 | 77. 2 | 74. 6 | 75. 0 | 76. 4 | 0. 0 |
| (b) | 4-Hydroxybutyl vinyl ether | 30. 1 | 0. 0 | 47. 3 | 0. 0 | 26. 6 | 0. 0 | 0. 0 | 0. 0 | 0. 0 | 13. 3 |
| | 2-Hydroxyethyl vinyl ether | 0.0 | 26.2 | 0.0 | 42. 4 | 21.9 | 53.4 | 70.2 | 26.2 | 42.4 | 0.0 |
| (C) | Lauroyl peroxide | 2.0 | 2. 0 | 2. 0 | 2. 0 | 2. 0 | 2. 0 | 2. 0 | 2. 0 | 2. 0 | 2. 0 |
| | VPS 1001 | 3. 0 | 3. 0 | 3. 0 | 3. 0 | 3. 0 | 3. 0 | 3. 0 | 3. 0 | 3. 0 | 1. 5 |
| (d) | NE-10 | 19. 0 | 0. 0 | 0. 0 | 0. 0 | 0. 0 | 19. 0 | 0. 0 | 0. 0 | 0. 0 | 19. 0 |
| | NE-30 | 0. 0 | 20. 0 | 20. 0 | 20. 0 | 20. 0 | 0. 0 | 20. 0 | 0. 0 | 0. 0 | 0. 0 |
| | ER-30 | 0. 0 | 0. 0 | 0. 0 | 0. 0 | 0. 0 | 0. 0 | 0. 0 | 20. 0 | 20. 0 | 0. 0 |
| (e) | Ethyl vinyl ether | 48. 9 | 48. 1 | 35. 8 | 30. 5 | 29. 7 | 21. 4 | 7. 2 | 48. 1 | 30. 5 | 65. 9 |
| Solvent Ethyl acetate | | 500. 0 | 500. 0 | 500. 0 | 500. 0 | 500. 0 | 500. 0 | 500. 0 | 500. 0 | 500. 0 | 500. 0 |

| | | | | | | | | | | | |
|---|---|---|---|---|---|---|---|---|---|---|---|
| Ex. = Example, CEx. = Comparative Example VPS-1001: Azo-group-containing polydimethylsiloxane of the general formula (2) in which y = 120 - 150 and z = 7 - 10, having a number average molecular weight of 70,000 - 90,000 and having a polysiloxane segment molecular weight of approximately 5,000 (supplied by Wako Pure Chemical Industries, Ltd.) NE-10: Nonionic reactive emulsifier "NE-10" of the general formula (3) in which n = 9, m = 1 and s = 10 (supplied by Asahi Denka Co., Ltd.) NE-30: Nonionic reactive emulsifier "NE-30" of the general formula (3) in which n = 9, m = 1 and s = 30 (supplied by Asahi Denka Co., Ltd.) ER-30: Nonionic reactive emulsifier "ER-30" of the general formula (4) in which m = 1 and s = 30 (supplied by Asahi Denka Co., Ltd.) | | | | | | | | | | | |

**Table 2**

| | | Ex. 1 | Ex. 2 | Ex. 3 | Ex. 4 | Ex. 5 | Ex. 6 | Ex. 7 | Ex. 8 | Ex. 9 | CEx. 1 |
|---|---|---|---|---|---|---|---|---|---|---|---|
| Compo-ent | Monomers | Fluorinated polymer A1 | Fluorinated polymer A2 | Fluoriinated polymer A3 | Fluorinated polymer A4 | Fluorinated polymer A5 | Fluorinated polymer A6 | Fluorinated polymer A7 | Fluorinated polymer A8 | Fluorinated polymer A9 | Fluorinated polymer B1 |
| (a) | Hexafluoro-propylene | 39. 8 | 33. 8 | 39. 2 | 34. 8 | 34. 8 | 34. 2 | 34. 5 | 33. 8 | 34. 8 | 50. 2 |
| | Perfluoro(propyl vinyl ether) | 10.0 | 14.2 | 10.5 | 14.9 | 14. 7 | 15. 2 | 14. 8 | 14. 2 | 14.9 | - |
| (b) | 4-Hydroxybutyl vinyl ether | 13.1 | - | 21.2 | - | 12. 2 | - | - | - | - | 5.3 |
| | 2-Hydroxyethyl vinyl ether | - | 15.0 | - | 25. 0 | 13. 2 | 31. 8 | 42. 1 | 15. 0 | 25. 0 | - |
| (d) | NE- 1 0 | 0. 4 | - | - | - | - | 0. 5 | - | - | - | 1. 2 |
| | NE-30 | - | 0. 5 | 0. 6 | 0. 5 | 0. 6 | - | 0. 6 | - | - | - |
| | ER-30 | - | - | - | - | - | - | - | 0. 6 | 0. 5 | - |
| (e) | Ethyl vinyl ether | 34. 3 | 33. 7 | 25. 8 | 22. 0 | 21. 9 | 15. 6 | 5. 3 | 33. 6 | 22. 0 | 42. 1 |
| Polydimethylsiloxane segment (mol%) | | 2.4 | 2.8 | 2.7 | 2.8 | 2.6 | 2.7 | 2.7 | 1.2 | 2.8 | 2.8 |
| Fluorine content (%) | | 49. 1 | 48. 1 | 45. 6 | 48. 6 | 46. 7 | 49. 6 | 46. 9 | 46. 9 | 48. 3 | 48. 6 |
| Number average molecular weight | | 42000 | 36000 | 53000 | 43000 | 39000 | 52000 | 43000 | 33000 | 42000 | 41000 |

| | | | | | | | | | | | |
|---|---|---|---|---|---|---|---|---|---|---|---|
| Ex. = Example, CEx. = Comparative Example NE-10: Nonionic reactive emulsifier "NE-10" of the general formula (3) in which n = 9, m = 1 and s = 10 (supplied by Asahi Denka Co., Ltd.) NE-30: Nonionic reactive emulsifier "NE-30" of the general formula (3) in which n = 9, m = 1 and s = 30 (supplied by Asahi Denka Co., Ltd.) ER-30: Nonionic reactive emulsifier "ER-30" of the general formula (4) in which m = 1 and s = 30 (supplied by Asahi Denka Co., Ltd.) | | | | | | | | | | | |

### <Preparation of particles formed of silica as main component>

### Preparation Example 1

30 kg of water-dispersion colloidal silica (trade name: SNOWTEX-O, supplied by Nissan Chemical Industries, Ltd.) having a solid content of 20 % by weight, a pH of 2.7 and a specific surface area, measured by a BET method, of 226 m²/g, having a concentration of 4.1 x 10⁻⁵ mol/g silanol on silica particle, measured by a methyl red adsorption method, and containing 4.6 ppm of Na, 0.013 ppm of Ca and 0.011 ppm of K as metal contents in a solvent measured by an atomic absorption method was placed in a tank and heated to 50°C. The water-dispersion colloidal silica was concentrated with an ultrafiltration membrane module (supplied by TRITEC CORPORATION) and an ultrafiltration membrane made of alumina (trade name: Ceramic UF Element, specifications: 4 mmφ, 19'openings, length 1 m, fractional molecular weight = 150,000, membrane area = 0.24 m², supplied by NGK INSULATORS, LTD.) at a circulating flow rate of 50 liters/minute under a pressure of 1 kg/cm². After 0.5 hour, 10 kg of a filtrate was discharged to show the colloidal silica had a solid content of 30 % by weight. The average permeation flow rate (membrane permeation weight per unit area of the ultrafiltration membrane and per unit hour) was 90 kg/m²/hour before the initiation of the concentration, and it was 55 kg/m²/hour after completion of the concentration. The number average particle diameter measured by a dynamic light scattering method was 11 nm, and there was found no change from the number average particle diameter found before the concentration.

After completion of the above step, 14 kg of methanol was added, and the colloidal silica was concentrated with the above ultrafiltration membrane module and the above ultrafiltration membrane filter at a temperature of 50°C at a circulating flow rate of 50 liters/minute under a pressure of 1 kg/cm², 14 kg of a filtrate was discharge, and this procedure was repeated 6 times, to give 20 kg of a methanol-dispersion colloidal silica having a solid content of 30 % by weight, a water content, measured by a Karl Fischer method, of 1.5 % by weight and a number average particle diameter, measured by a dynamic light scattering method, of 11 nm. The average permeation flow rate in the procedures of six times was 60 kg/m²/hour, and the procedures took 6 hours. The thus-obtained methanol-dispersion colloidal silica had a specific surface area, measured by a BET method, of 237 m²/g and had a concentration of 3.5 x 10⁻⁵ mol/g silanol on silica particle, measured by a methyl red adsorption method. The thus-obtained methanol-dispersion colloidal silica will be referred to as "C-1".

### Preparation Example 2

To 20 kg of the methanol-dispersion colloidal silica prepared in the Preparation Example 1 was added 0.6 kg of trimethylmethoxysilane (supplied by Dow Corning Toray Silicone Co., Ltd.), and the mixture was stirred under heat at 60°C for 3 hours. The number average particle diameter measured by a dynamic light scattering method was 11 nm, and there was found no change from the number average particle diameter found before the treatment. The thus-obtained methanol-dispersion hydrophobic colloidal silica had a specific surface area, measured by a BET method, of 240 m²/g and a concentration of 2.1 x 10⁻⁵ mol/g silanol on silica particle, measured by a methyl red adsorption method.

After completion of the above step, 14 kg of methyl ethyl ketone (MEK) was added, and the colloidal silica was concentrated with the above ultrafiltration membrane filter at a temperature of 50°C at a circulating flow rate of 50 liters/minute under a pressure of 1 kg/cm², 14 kg of a filtrate was discharge, and this procedure was repeated 5 times, to give 20 kg of an MEK-dispersion hydrophobic colloidal silica having a solid content of 30 % by weight, a water content, measured by a Karl Fischer method, of 0.3 % by weight, a methanol content, measured by gas chromatography (GC), of 3.2 % by weight and a number average particle diameter, measured by a dynamic light scattering method, of 11 nm. The average permeation flow rate in the procedures of five times was 70 kg/m²/hour, and the procedures took 4 hours. The thus-obtained MEK-dispersion colloidal silica had a specific surface area, measured by a BET method, of 230 m²/g and had a concentration of 1.8 x 10⁻⁵ mol/g silanol on silica particle, measured by a methyl red adsorption method. Further, the MEK-dispersion hydrophobic colloidal silica was measured for metal contents in the solvent by an atomic absorption method to show very small metal contents, as small as 0.05 ppm of Na and 0.001 ppm of each of Ca and K. The thus-obtained MEK-dispersion colloidal silica will be referred to as "C-2".

### Preparation Example 3: Preparation of reactive silica fine powder sol (C-3)

A mixture containing 3.7 parts by weight of 3-mercaptopropyltrimethoxysilane, 93.2 parts by weight of the silica particle sol prepared in Preparation Example 2 (28 parts by weight as silica particles) and 0.25 parts by weight of ion-exchanged water was stirred at 60°C for 3 hours, then, 2.9 parts by weight of methyl orthoformate was added, and the mixture was stirred at the same temperature for 1 hour, to give reactive particles (dispersion (C-3)). 2 Grams of the dispersion (C-3) was weighed on an aluminum dish and dried on a hot plate at 175°C for 1 hour, and a solid content was determined by weighing, to show 31 %.

### <Preparation of curable resin composition>

### Example 10

### (1) Preparation of crosslinked polymer

As shown in Table 3, 100 g of the fluorinated olefin polymer A1 obtained in Example 1 was dissolved in 900 g of methyl ethyl ketone (MEK) as a solvent together with 10 g of methoxylated methyl melamine "Cymel 303" (supplied by MITSUI CYTEC, LTD.) as a crosslinking compound, and the mixture was allowed to react with stirring at 100°C for 5 hours. After the reaction, the reaction mixture was cooled to room temperature, to give a solution of a crosslinked polymer that was a reaction product of the fluorinated olefin polymer and the crosslinking compound. Then, the solution was gradually poured into a large excess of cold methanol with stirring, to precipitate and deposit the crosslinked polymer. Further, the obtained crosslinked polymer was dissolved in MEK, followed by precipitation with cold methanol. The thus-obtained crosslinked polymer was dried by vacuum drying.

### (2) Preparation of curable resin composition

As shown in Table 3, 100 g of the above crosslinked polymer and 2 g of p-toluenesulfonic acid as a curing catalyst were added to, and dissolved in, 900 g of MEK to prepare a curable resin composition. This solution that was the curable resin composition had a solid concentration of 10 % and a viscosity of 30 cps or less.

### Examples 11-13, 17, 18, 22-26, 29 and 31 and Comparative Example 2

Crosslinked polymers were prepared in the same manner as in Example 10 except that the fluorinated olefin polymer and the crosslinking compound were changed to those shown in Tables 3 and 4, and curing catalysts shown in Table 3 and 4 were added to the obtained crosslinked polymers, to prepare curable resin compositions. Concurrently with the dissolving of the crosslinked polymer in Example 10, a surfactant (CC-15) was dissolved in Example 11, and silica particles were dissolved in Examples 24, 25, 26 and 29.

In Tables 3 and 4, each amount of the crosslinking compound, the curing catalyst and the surfactant shows an amount (part by weight) per 100 parts by weight of the fluorinated olefin polymer. In Table 4, each amount of the silica particles refers to an amount (part by weight) per 100 parts by weight of the fluorinated olefin polymer and shows a solid content (part by weight) free of any dispersing medium.

### Examples 14-16, 19-21, 27, 28 and 30

Unlike Example 10, components shown in Tables 3 and 4 were dissolved without reacting a fluorinated olefin polymer and a crosslinking compound in advance, to prepare curable resin compositions.

### <Evaluation of cured product>

Coating films formed from the curable resin compositions obtained in Examples 10 to 23 and Comparative Example 2 were heated at 120°C for 60 minutes, to form cured films, and they were measured for various properties shown below. Tables 3 and 4 show the results.

### (1) Measurement of reflectance

Each of the above curable resin composition solutions was diluted with butanol to prepare varnishes having a solid concentration of 4 % each. The varnishes were applied to 3 mm thick transparent polycarbonate plates by a dip coating method at a pull-up rate of 100 mm/minute, and the thus-obtained coating films were heated at 120°C for 1 hour to form cured films. Each of these cured films was measured for a thickness with an ellipsometer to show 1,110 angstroms. Each of the polycarbonate plates on which the cured films were formed (these will be referred to as "samples 1") was measured for a reflectance with a spectrophotometer with an integrating sphere having a diameter of 60 mm "model U-3410" (supplied by Hitachi, Ltd.).

### (2) Scratch resistance test 1 (cloth rubbing resistance test)

The above samples 1 were subjected to a scratch resistance test for evaluating the property of adhesion of a cured film to a substrate and the strength of the cured film. That is, the surface of each cured film was repeatedly rubbed 25 times with "Kimwipe" (supplied by Jujo Kimberly K.K.) under the condition of a load of 1 kg/cm², and the surfaces of the cured films were visually observed for scratches. In addition, the above procedure was repeated with non-woven fabrics (BEMCOT S-2) that had been immersed in MEK, and the surfaces of such cured films were visually observed for scratches. A cured film in which none of peeling and scratching by any one of the Kimwipe and the non-woven fabric that had been immersed in MEK was observed was evaluated as "⊚", a cured film in which none of peeling and scratching by the Kimwipe or the non-woven fabric that had been immersed in MEK was observed was evaluated as "○", and a cured film that was partly peeled off or that caused streaky scratch(es) was evaluated as "X".

### (3) Scratch resistance test 2 (steel wool resistance test)

The above curable resin composition solutions were diluted with methyl isobutyl ketone (MIBK) to prepare varnishes having a solid concentration of 4 % each. The varnishes were applied onto hard-coated polycarbonate plates (refractive index of hard coat 1.55, thickness of polycarbonate plate 1 mm, supplied by Teijin Chemicals, Ltd.) with a wire-bar-coater (#3), and the applied varnishes were air-dried at room temperature for 5 minutes to form coating films. Then, the coating films were heated at 120°C for 1 hour to form cured films having a thickness of 0.1 µm each.

These cured films were tested for resistance to steel wool by the following method. That is, a steel wool (BON STAR No. 0000, supplied by Nihon Steel Wool K.K.) was attached to a color fastness rubbing tester AB-301 (supplied by TESTER SANGYO CO., LTD.) and rubbed against the surface of each cured film repeatedly 10 times under the condition of a load of 200 g, and the surface of each cured film was visually observed for scratches. A cured film in which almost no peeling or scratches was observed was evaluated as "⊚", a cured film in which a narrow scratch was observed was evaluated as "○", and a cured film that was partly peeled off or that had streaky scratch(es) on the surface thereof was evaluated as "X".

### (4) Evaluation of dust wiping-off property

In an environment having a temperature of 23°C and a relative humidity of 30 %, the above non-woven fabric was allowed to uniformly slide on the entire surface of each of the above samples 1 five times, then, chopped cellulose fibers were allowed to adhere thereto by scattering, and then a clean non-woven fabric was wiped over each sample surface. A case where the chopped fibers adhering to a sample surface were wiped off almost completely was evaluated as "⊚", a case where few chopped fibers remained on a sample surface without being wiped off was evaluated as "○", and a case where most of chopped fibers remained on a sample surface without being wiped off was evaluated as "X".

**Table 3**

| | Composition | Ex. 10 | Ex.11 | Ex. 12 | Ex.13 | Ex.14 | Ex.15 | Ex.16 | Ex.17 | Ex.18 | Ex.19 | Ex.20 | Ex.21 | Ex.22 | Ex.23 | CEx. 2 |
|---|---|---|---|---|---|---|---|---|---|---|---|---|---|---|---|---|
| Fluorinated polymer | A1 | 100 | 100 | | | | | | | | | | | | | |
| | A2 | | | 100 | | | | | | | | | | | | |
| | A3 | | | | 100 | 100 | 100 | | | | | | | | | |
| | A4 | | | | | | | 100 | 100 | 100 | | | | | | |
| | A 5 | | | | | | | | | | 100 | | | | | |
| | A 6 | | | | | | | | | | | 100 | | | | |
| | A7 | | | | | | | | | | | | 100 | | | |
| | A8 | | | | | | | | | | | | | 100 | | |
| | A9 | | | | | | | | | | | | | | 100 | |
| | B1 | | | | | | | | | | | | | | | 100 |
| Crosslinking compound | Cymel 300 | | | | | 1 0 | | | | 2 0 | | 2 0 | 2 0 | | | |
| | Cymel 303 | 1 0 | 1 0 | 2 0 | 1 0 | | 2 0 | 1 0 | 2 0 | | 2 0 | | | 2 0 | 2 0 | 1 0 |
| Curing catalyst | p-toluene-sulfonic acid | 2 | 2 | 2 | 2 | 2 | 2 | 2 | 2 | 2 | 2 | 2 | 2 | 2 | 2 | 2 |
| Surfactant | CC-15 | | 2 | | | | | | | | | | | | | |
| Solvent | | MEK | MEK | MI BK | MIBK | MI BK | MIBK | MIBK | MI BK | MIBK | MIBK | MI BK | MI BK | MIBK | MI BK | MIBK |
| Properties | Reflectance | 1. 7 | 1. 7 | 1. 8 | 1. 7 | 1. 7 | 1. 8 | 1.7 | 1. 8 | 1. 8 | 1. 8 | 1. 9 | 2. 0 | 1. 8 | 1. 8 | 1. 7 |
| | *1 | ○ | ○ | ○ | ⊚ | ⊚ | ⊚ | ⊚ | ⊚ | ⊚ | ⊚ | ⊚ | ⊚ | ○ | ⊚ | ○ |
| | *2 | ○ | ○ | ○ | ○ | ○ | ○ | ○ | ○ | ○ | ○ | ○ | ○ | ○ | ○ | × |
| | *3 | ○ | ⊚ | ⊚ | ⊚ | ⊚ | ⊚ | ⊚ | ⊚ | ⊚ | ⊚ | ⊚ | ⊚ | ⊚ | ⊚ | × |
| Step of preparing crosslinked polymer | | Yes | Yes | Yes | Yes | No | No | No | Yes | Yes | No | No | No | Yes | Yes | Yes |

| | | | | | | | | | | | | | | | | |
|---|---|---|---|---|---|---|---|---|---|---|---|---|---|---|---|---|
| Ex. = Example, CEx. = Comparative Example *1: Cloth rubbing resistance, *2: Steel wool resistance, *3: Dust wiping-off property | | | | | | | | | | | | | | | | |

**Table 4**

| | Composition | Ex. 24 | Ex. 25 | Ex. 26 | Ex. 27 | Ex. 28 | Ex. 29 | Ex. 30 | Ex. 31 |
|---|---|---|---|---|---|---|---|---|---|
| Fluorinated polymer | A1 | | | | | | | | |
| | A2 | | | | | | | | |
| | A3 | | | | | | | | |
| | A4 | 100 | 100 | 100 | 100 | | | 100 | 100 |
| | A 5 | | | | | | | | |
| | A 6 | | | | | | | | |
| | A7 | | | | | 100 | | | |
| | A8 | | | | | | 100 | | |
| | A9 | | | | | | | | |
| | B1 | | | | | | | | |
| Crosslinking compound | Cymel 300 | | | | | 20 | | 20 | |
| | Cymel 303 | 20 | 20 | 20 | 10 | | 20 | | 20 |
| Curing catalyst | p-toluenesulfonic acid | 2 | 2 | 2 | 2 | 2 | 2 | 2 | 2 |
| Surfactant | C C - 15 | | | | | | | | |
| Silica particles (solid content) | C1 | | | | 20 | | | | |
| | C2 | 14 | 22 | 52 | | 22 | 22 | | |
| | C3 | | | | | | | 22 | 22 |
| Solvent | | MIBK | MIBK | MIBK | MIBK | MIBK | MIBK | MIBK | MIBK |
| Properties | Reflectance | 1.8 | 1.8 | 1.8 | 1.7 | 2.0 | 1.8 | 2.0 | 1.8 |
| | *1 | ⊚ | ⊚ | ⊚ | ⊚ | ⊚ | ⊚ | ⊚ | ⊚ |
| | *2 | ⊚ | ⊚ | ⊚ | ⊚ | ⊚ | ⊚ | ⊚ | ⊚ |
| | *3 | ⊚ | ⊚ | ⊚ | ⊚ | ⊚ | ⊚ | ⊚ | ⊚ |
| Step of preparing crosslinked polymer | | Yes | Yes | Yes | No | No | Yes | No | Yes |

| | | | | | | | | | |
|---|---|---|---|---|---|---|---|---|---|
| Ex. = Example, *1: Cloth rubbing resistance, *2: Steel wool resistance, *3: Dust wiping-off property Cymel 300: An average of 1.35 x monomer, formed by self-condensation of a compound of the following formula (7). Cymel 303: An average of 1.7 x monomer, formed by self-condensation of a compound of the following formula (7). CC-15: Cationic surfactant that is a quaternary polyether ammonium having a structure of the following formula (8) (supplied by Asahi Denka Co., Ltd.) | | | | | | | | | |

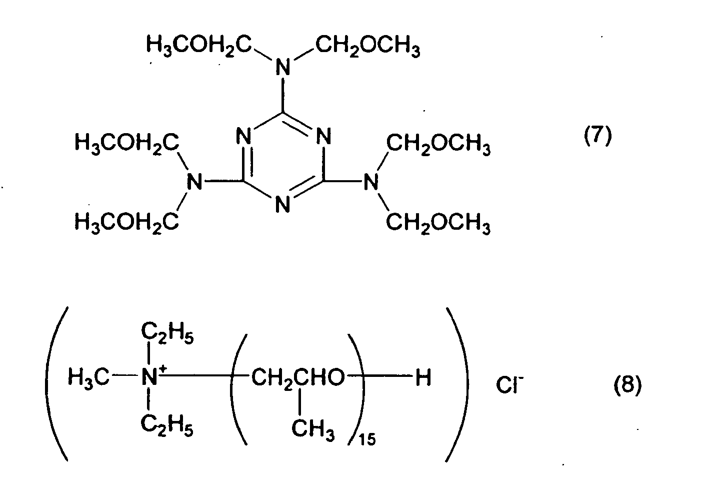

From the results shown in Tables 3 and 4, it is clear that according to the curable resin compositions in Examples, cured films are excellent in the scratch resistance and dust wiping-off properties and have a low refractive index. In contrast, according to the curable resin composition containing 10 mol% or less of a hydroxylated monomer in Comparative Example, a cured film has insufficient dust wiping-off properties.

### Industrial Utility

The curable resin composition of the present invention exhibits excellent heat curability, and a cured product formed from the curable resin composition of the present invention has a low refractive index and is excellent in scratch resistance and dust wiping-off properties. Therefore, the curable resin composition of the present invention can be advantageously used for forming optical materials such as an antireflection film, an optical fiber sheath material, etc., and by utilizing its high fluorine content, it can be suitably used as a coating material for a substrate required to have climate resistance, a material for a weather-resistant film, a coating material, and the like. Moreover, the above cured film has excellent adhesion to a substrate, has high scratch resistance and produces an excellent antireflection effect, so that it is remarkably useful as an antireflection film. When it is applied to various displays, the visibility thereof can be improved.

## Claims

1. A curable resin composition comprising a fluorinated olefin polymer and an amino compound having a total of two or more amino groups, pentaerythritol, polyphenol or glycol as a crosslinking compound;
the fluorinated olefin polymer being a copolymer of hexafluoro-propylene, perfluoro(propyl vinyl ether), hydroxylated monomers and ethyl vinyl ether,
the fluorinated olefin polymer containing 13 mol% to 45 mol% of structural units derived from the hydroxylated monomers.

2. The curable resin composition of claim 1, wherein the fluorinated olefin polymer contains 21 mol% to 45 mol% of structural units derived from the hydroxylated monomers.

3. The curable resin composition of claim 1, which contains a crosslinked polymer of said fluorinated olefin polymer and said crosslinking compound.

4. The curable resin composition of claim 1, which further contains a cationic surfactant that is a quaternary polyether ammonium salt.

5. The curable resin composition of claim 1, which further contains particles formed of silica as a main component.

6. An antireflection film comprising a cured product formed by curing the curable resin composition recited in any one of claims 1 to 5.

## Patentansprüche

1. Härtbare Harzzusammensetzung, die ein fluoriertes Olefinpolymer und eine Aminoverbindung mit insgesamt zwei oder mehr Aminogruppen, Pentaerythritol, Polyphenol oder Glycol als eine vernetzende Verbindung umfasst;
wobei das fluorierte Olefinpolymer ein Copolymer von Hexafluorpropylen, Perfluor(propylvinylether), hydroxylierten Monomeren und Ethylvinylether ist und
wobei das fluorierte Olefinpolymer 13 mol% bis 45 mol% Struktureinheiten enthält, die sich von den hydroxylierten Monomeren ableiten.

2. Härtbare Harzzusammensetzung nach Anspruch 1, wobei das fluorierte Olefinpolymer 21 mol% bis 45 mol% Struktureinheiten enthält, die sich von den hydroxylierten Monomeren ableiten.

3. Härtbare Harzzusammensetzung nach Anspruch 1, die ein vernetztes Polymer aus dem fluorierten Olefinpolymer und der vernetzenden Verbindung enthält.

4. Härtbare Harzzusammensetzung nach Anspruch 1, die des Weiteren ein kationisches oberflächenaktives Mittel enthält, welches ein quartäres Polyetherammoniumsalz ist.

5. Härtbare Harzzusammensetzung nach Anspruch 1, die des Weiteren Teilchen enthält, die aus Siliciumoxid als einer Hauptkomponente gebildet.

6. Antireflektierender Film, der ein gehärtetes Produkt umfasst, welches durch Härten der härtbaren Zusammensetzung nach einem der Ansprüche 1 bis 5 erzeugt ist.

## Revendications

1. Composition de résine durcissable comprenant un polymère oléfinique fluoré et un composé amino ayant un total de deux ou plusieurs groupes amino, du pentaérythritol, du polyphénol ou du glycol comme composé de réticulation ;
le polymère oléfinique fluoré étant un copolymère d'hexafluoropropylène, de perfluoro(éther de propyl vinyle), de monomères hydroxylés et d'éther d'éthyl vinyle,
le polymère oléfinique fluoré contenant 13 % en mole jusqu'à 45 % en mole de motifs structurels dérivés des monomères hydroxylés.

2. Composition de résine durcissable selon la revendication 1, dans laquelle le polymère oléfinique fluoré contient 21 % en mole à 45 % en mole de motifs structurels dérivés des monomères hydroxylés.

3. Composition de résine durcissable selon la revendication 1, qui contient un polymère réticulé dudit polymère oléfinique fluoré et dudit composé de réticulation.

4. Composition de résine durcissable selon la revendication 1, qui contient en outre un tensioactif cationique qui est un sel de polyéther ammonium quaternaire.

5. Composition de résine durcissable selon la revendication 1, qui contient en outre des particules formées de silice comme composant principal.

6. Film antireflet comprenant un produit durci formé par durcissement de la composition de résine durcissable énoncée dans l'une quelconque des revendications 1 à 5.
